Europäisches Patentamt

(19) European Patent Office

Office européen des brevets

(11) Numéro de publication : **0 026 790**
**B1**

# (12) FASCICULE DE BREVET EUROPÉEN

(45) Date de publication du fascicule du brevet :
**28.12.83**

(21) Numéro de dépôt : **79103783.1**

(22) Date de dépôt : **03.10.79**

(51) Int. Cl.³ : **B 23 B 15/00**

---

(54) **Dispositif pour la manipulation automatique de pièces sur un tour.**

---

(43) Date de publication de la demande :
**15.04.81 Bulletin 81/15**

(45) Mention de la délivrance du brevet :
**28.12.83 Bulletin 83/52**

(84) Etats contractants désignés :
**AT CH DE FR GB IT NL SE**

(56) Documents cités :
**DD-A-      42 671**
**DE-A- 1 752 850**
**DE-A- 2 734 228**
**DE-U- 1 790 261**
**DE-U- 7 107 281**
**GB-A-      633 422**
**US-A- 3 575 302**
**US-A- 3 658 190**
**US-A- 4 082 018**
**MACHINERY AND PRODUCTION ENGINEERING, 14-28 décembre 1977, London, HANOVERVIEW "Automatic work loading" pages 564 à 566**
**MACHINERY AND PRODUCTION ENGINEERING, 16 août 1972, London, "Some work-handling arrangements at Olympia"**

(73) Titulaire : **N.V. Mondiale 81**
**Scharbeeklei 55**
**B-1800 Vilvoorde (BE)**

(72) Inventeur : **Muguerza, Luis**
**29 rue Edmond Picard**
**B-1180 Bruxelles (BE)**

(74) Mandataire : **Pirson, Jean et al**
**c/o Bureau GEVERS SA 7 rue de Livourne Bte 1**
**B-1050 Brussels (BE)**

---

## Dispositif pour la manipulation automatique de pièces sur un tour

La présente invention a pour objet un dispositif pour la manipulation automatique de pièces à usiner sur un tour, tel que défini dans le préambule de la revendication 1.

Les caractéristiques de ce préambule sont connues par le document US-A-4.082.018.

Toutefois, un tel dispositif de chargement et de déchargement de pièces pour tour présente l'inconvénient, notamment par suite du chargement et déchargement frontal à l'endroit occupé par l'opérateur du tour, de nécessiter l'ouverture ou l'enlèvement d'un capot de projection, qui est généralement prévu pour empêcher les projections de copeaux et de lubrifiant, avant de permettre le chargement et le déchargement.

De ce fait, la broche du tour doit être complètement à l'arrêt avant de pouvoir ouvrir ou enlever le capot de protection et procéder au déchargement et au chargement d'une nouvelle pièce.

Ceci a donc comme conséquence une perte de temps non négligeable entre chaque opération de chargement et de déchargement.

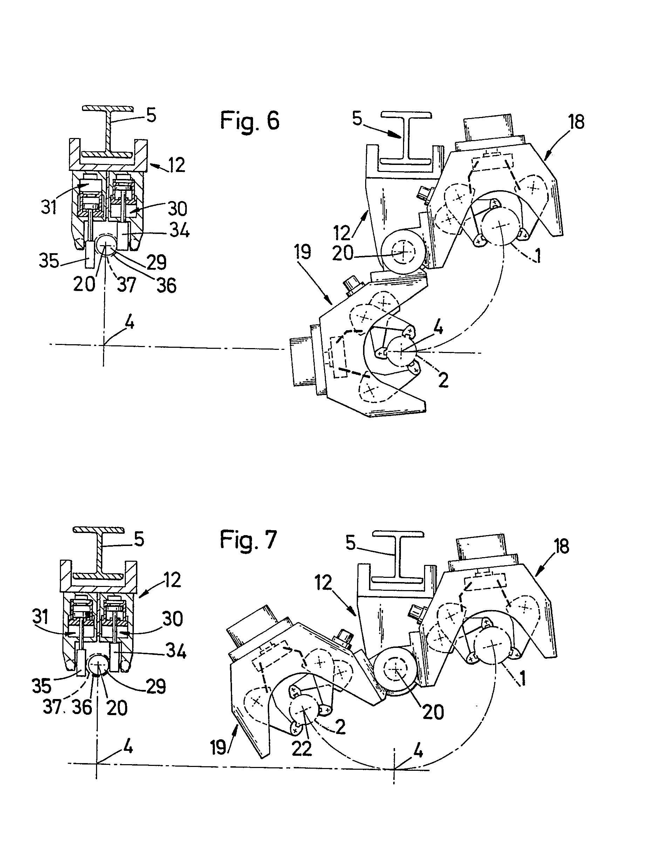

Le document « Machinery and production Engineering » 14-28 Décembre 1977, London, Hanoverview. « Automatic work loading » (pages 564 et 565 colonne de droite et figure 6) décrit également un dispositif à chargement et déchargement frontal de pièces pour tour et présente, par conséquent, sensiblement les mêmes inconvénients que ceux invoqués en rapport avec le document US-A-4.082.018.

On connaît également des robots qui peuvent assurer la manutention automatique de pièces de tout type et ce, quels que soient les endroits où ces pièces doivent être prises et déposées.

De tels robots, qui sont très complexes de construction et de programmation, présentent l'inconvénient d'être d'un coût prohibitif pour la manipulation de pièces à usiner sur un tour d'autant plus que, pour une utilisation de ce type, une faible partie des possibilités de tels robots serait exploitée étant donné que les pièces à usiner sur un tour sont toujours des pièces de révolution et que leur pose et leur retrait s'effectue toujours au même endroit et sur un même axe, c'est-à-dire l'axe de la broche.

L'invention a pour but de remédier aux inconvénients présentés par les robots et système précités et de procurer un dispositif de manutention compact, robuste et de coût réduit qui présente notamment pour avantage de ne nécessiter aucune programmation, de réduire au strict minimum le temps de la manipulation des pièces entre deux opérations de chargement et de déchargement, et de permettre l'utilisation du tour avec un capot de protection constamment en position fermée, ce qui augmente considérablement la sécurité de l'opérateur et la propreté du milieu ambiant.

A cet effet, dans le dispositif suivant l'invention, les pinces sont disposées de part et d'autre du plan passant par l'axe de la broche et par l'axe longitudinal de la poutre et l'axe, autour duquel ces pinces sont articulées, est situé dans le plan susdit, le rayon de ladite surface cylindrique droite dont l'axe coïncide avec l'axe autour duquel les pinces sont articulées étant égal à la distance séparant ce dernier axe de l'axe de la broche.

D'autres détails et particularités de l'invention ressortiront des revendications 2 à 11. La description des dessins annexés au présent mémoire représente, à titre d'exemple non limitatif, une forme de réalisation particulière du dispositif suivant l'invention.

La figure 1 est une vue en élévation, avec brisures partielles, du dispositif suivant l'invention, certains éléments étant représentés dans leurs positions extrêmes, une de ces positions étant représentée en traits pleins, tandis que l'autre position est représentée en traits interrompus.

La figure 2 est une vue suivant la ligne II-II de la figure 1, à plus grande échelle que celle de la figure 1.

La figure 3 est une section suivant la ligne III-III de la figure 1, à plus grande échelle que celle de la figure 1.

Les figures 4 à 8 sont des vues schématiques analogues à la figure 2 et montrent les pinces et leurs moyens de commande dans les diverses positions qu'ils peuvent occuper.

La figure 9 est une vue schématique analogue aux figures 4 à 8 et qui représente une variante des pinces illustrées à ces dernières figures.

Dans les différentes figures, les mêmes notations de référence désignent des éléments identiques.

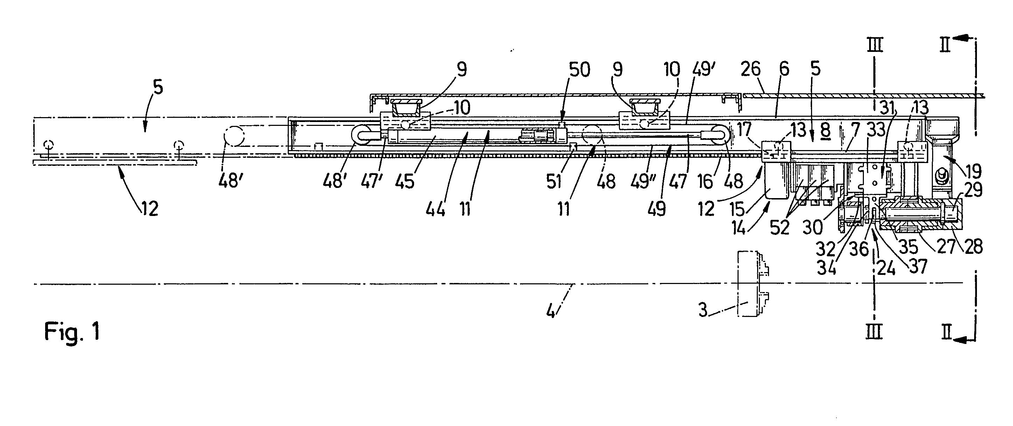

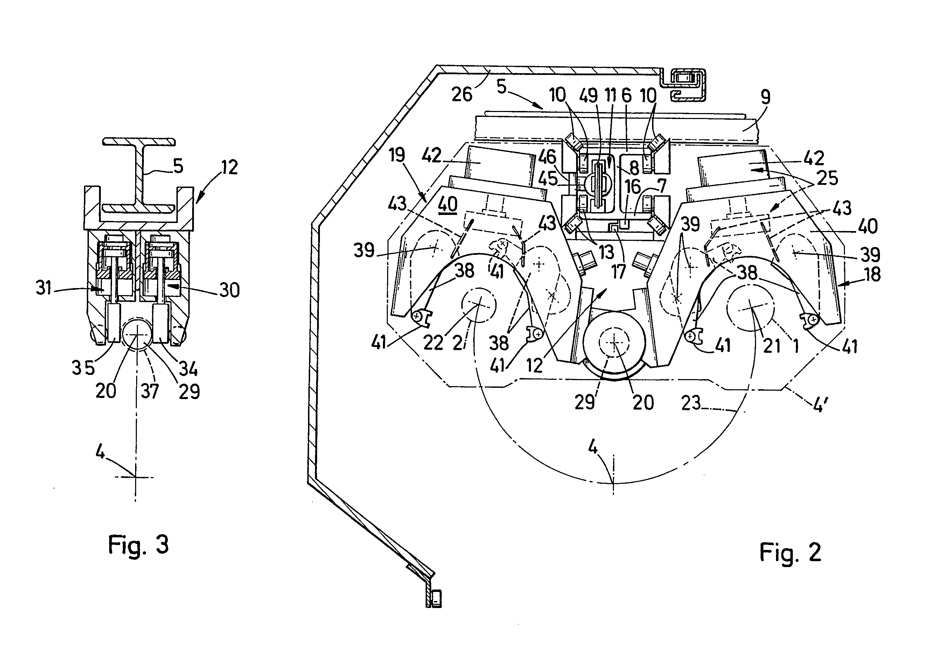

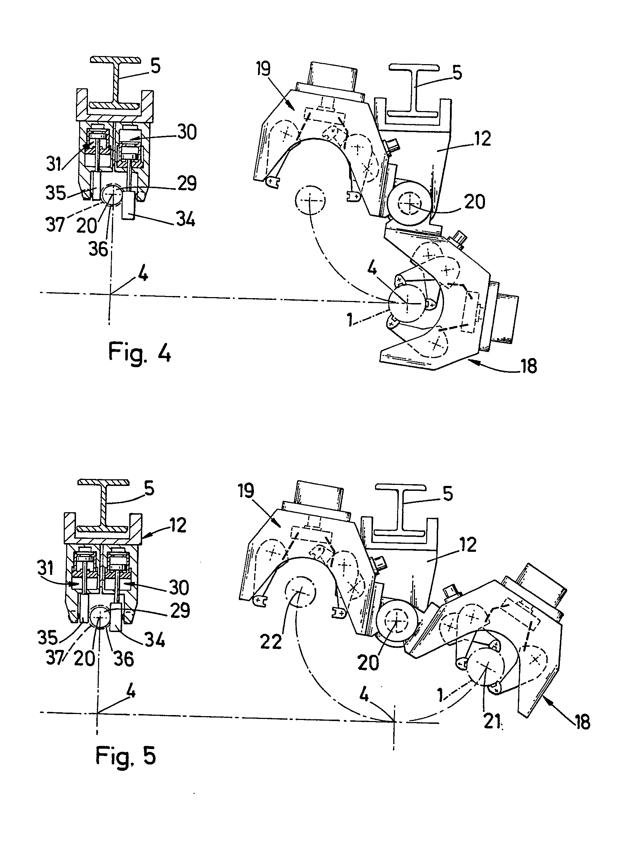

Le dispositif de manipulation suivant l'invention et représenté aux dessins est destiné à charger des pièces 1 à usiner et décharger des pièces 2 usinées d'un tour, non représenté aux dessins mais schématisé à la figure 1 par son mandrin 3 et par son axe de broche 4 et à la figure 2 par le profil du tunnel 4' du tour, pourvu de commandes programmées pour fixer et libérer les pièces 1 et 2 par rapport aux mandrin et contrepointe du tour. Ce dispositif comprend une poutre 5 d'axe longitudinal parallèle à l'axe de broche 4 et de section en H, les semelles 6 et 7 de la poutre étant disposées horizontalement tandis que l'âme 8 de la poutre est disposée symétriquement par rapport au plan vertical passant par l'axe de broche 4. Cette poutre 5 est montée dans des supports 9 fixés au tour et agencés pour que la poutre puisse, grâce à des galets 10, se déplacer suivant son axe longitudinal entre deux positions extrêmes, montrées à la figure 1, une position, représentée en traits pleins, dans laquelle la poutre se trouve lors du chargement et du déchargement des pièces du tour et une position, représentée en traits interrompus, dans laquelle la poutre se trouve lors de la prise des pièces à usiner dans un magasin non représenté et lors du déchargement des pièces usinées dans un autre magasin non représenté, des moyens 11 étant prévus pour entraîner ladite poutre, suivant une direction parallèle à son axe longitudinal, entre ces deux positions extrêmes. Le dispositif comprend un chariot 12 situé entre la poutre 5 et l'axe de broche 4 et suspendu à la samelle 7 de la poutre par des galets 13 guidant ledit chariot pour qu'il puisse se déplacer suivant l'axe longitudinal sous l'action de moyens 14 constitués, dans la forme de réalisation représentée, par un moteur pas à pas 15 fixé au chariot, par une crémaillère 16 fixée à la semelle 7 de la poutre 5, parallèlement à l'axe longitudinal de cette dernière, et par un pignon denté 17 entraîné en rotation autour de son axe par le moteur 15 et engrenant avec la crémaillère 16. Comme montré à la figure 1, le chariot peut être déplacé, sous l'action du moteur 15, entre deux positions extrêmes et ce en fonction de la longueur des pièces à manipuler, la position extrême avant du chariot, par rapport à la poutre, étant représentée en traits pleins, tandis que la position extrême arrière du chariot est représentée en traits interrompus. Le dispositif comprend aussi deux pinces 18 et 19 supportées par le chariot 12 et disposées de part et d'autre du plan vertical susdit passant par l'axe de broche 4. Ces pinces sont articulées autour d'un axe 20 situé dans ce plan vertical et sont immobiles suivant une direction parallèle audit axe, l'axe 20 et les pinces 18 et 19 étant agencés pour que l'axe 21 d'une pièce 1 et l'axe 22 d'une pièce 2 maintenues respectivement par les pinces 18 et 19 soient parallèles à l'axe de broche 4 et situés sur une surface cylindrique droite, de trace 23, ayant pour axe l'axe 20 et pour rayon la distance séparant ledit axe 20 de l'axe de broche 4. Le dispositif comprend enfin des moyens 24 pour déplacer chacune des pinces autour de l'axe 20 entre deux positions extrêmes, une position dans laquelle l'axe 21 ou 22 de la pièce est confondu avec l'axe de broche 4 et une position dans laquelle cet axe 21 ou 22 est dégagé de l'axe de broche 4 et des mandrin 3 et contrepointe du tour, ainsi que des moyens 25 pour ouvrir et fermer séparément chacune des pinces au moins dans chacune des positions extrêmes susdites. Tout le dispositif suivant l'invention est agencé dans le volume du tunnel 4' du tour de sorte qu'il peut assurer la manipulation des pièces avec le capot de protection 26 du tour en position de fermeture. Les deux pinces sont indépendantes l'une de l'autre et les moyens 24 susdits sont agencés pour déplacer séparément chacune des pinces. Chacune des pinces 18 et 19 est montée respectivement sur une buselure 27 ou 28 enfilée sur un arbre 29 d'axe 20 et coaxiale à ce dernier. L'arbre 29 est supporté par le chariot 12 de manière à pouvoir tourner librement autour de son axe 20 et pour être immobile suivant une direction parallèle audit axe. La buselure 27 supportant la pince 18 est calée sur l'arbre 29 de manière à être entraînée en rotation par celui-ci, tandis que la buselure 28 supportant la pince 19 est montée folle sur ledit arbre de manière à être immobile suivant une direction parallèle à l'axe 20 de l'arbre 29, les moyens 24 susdits étant agencés pour entraîner l'arbre 29 en rotation autour de son axe et pour entraîner la buselure 28 en rotation autour de l'axe de ce dernier. Ces moyens 24 sont constitués par deux vérins 30 et 31 dont les cylindres 32 et 33 sont fixés au chariot 12 et dont chacune des tiges de piston porte une crémaillère 34, 35. La crémaillère 34 du vérin 30 coopère avec une zone dentée 35 aménagée à la périphérie de l'arbre 29 pour entraîner celui-ci en rotation autour de son axe, tandis que la crémaillère 35 du vérin 31 coopère avec une zone dentée 37 ménagée à la périphérie de la buselure 28, montée folle sur l'arbre 29 pour entraîner cette dernière en rotation autour de l'axe 20 de l'arbre 29. Les vérins 30 et 31 sont des vérins à trois positions, deux de ces positions correspondant aux positions extrêmes susdites des pinces 18 et 19, une position pour le transport des pièces et une position pour faire coïncider les axes 21 et 22 des pièces avec l'axe de broche 4, la troisième position des vérins correspondant à une position intermédiaire des pinces dans laquelle la pince 18 prend la pièce à usiner 1 dans son magasin et dans laquelle la pince 19 dépose la pièce usinée 2 dans le magasin correspondant (voir figures 4 à 8). Chacune des pinces comprennent trois leviers 38 articulés en 39 sur une monture 40 de manière à se déplacer parallèlement à un plan perpendiculaire à l'axe de la broche 4. Les extrémités 41 de ces leviers sont régulièrement réparties, à 120 degrés, sur une circonférence ayant pour centre l'axe 21 et 22. Les leviers 38 de chaque pince sont commandés simultanément par un vérin 42 et par l'intermédiaire d'un embiellage 43 agencé pour que les distances qui séparent les extrémités 41 des leviers restent constamment égales. Les extrémités 41 des leviers sont conçues de manière à permettre qu'elles prennent appui tout aussi bien sur la surface externe des pièces 1 et 2 que sur la surface interne d'un alésage réalisé dans lesdites pièces. Pour entraîner la poutre 5 suivant son axe longitudinal, les moyens 11 comprennent un vérin 44, à double effet, d'axe parallèle à l'axe de la poutre et logé entre les semelles de cette dernière. Le cylindre 45 de ce vérin est fixé à une pièce 46 elle-même fixée au tour. Ce vérin 44 présente une tige de piston 47, 47' faisant saillie à chacune des extrémités du cylindre et chacune des extrémités libres des tiges de piston est munie d'une poulie 48, 48' d'axe perpendiculaire à l'axe du vérin. Un câble 49 passe sur ces poulies pour former deux brins 49' et 49'' parallèles disposés de part et d'autre du cylindre 45, le brin 49' étant immobilisé, en 50, par rapport au cylindre, tandis que le brin 49'' est immobilisé, en 51, par rapport à la poutre 5. Ce type d'entraînement de la poutre permet d'avoir une course de poutre double de celle du vérin 44.

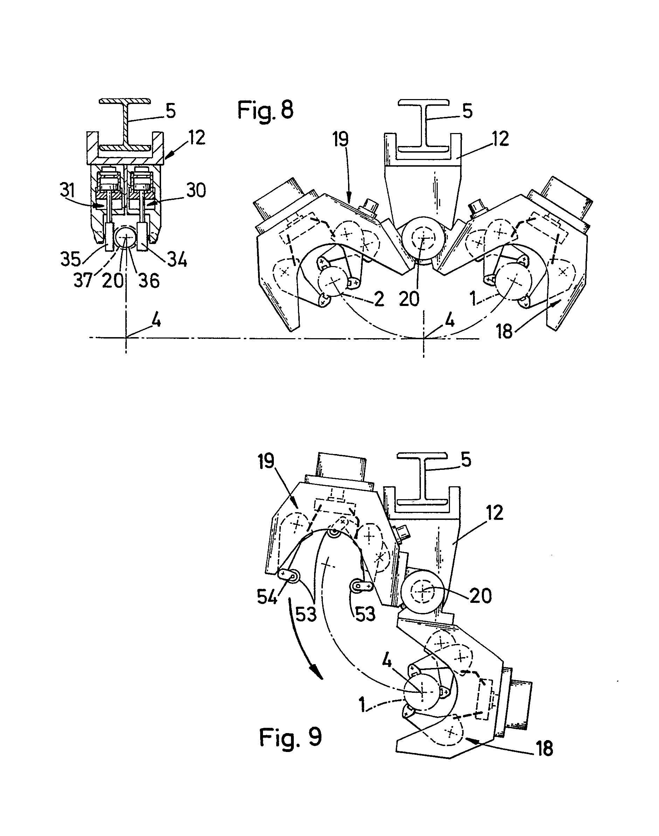

Aux figures schématiques 4 à 8 montrant les diverses positions respectives des pinces 18 et 19 et les positions respectives des crémaillères 34 et 35 commandées par les vérins 32 et 33, on voit, à la figure 4, la pince 18 posant la première pièce 1 à usiner de manière à ce que son axe 21 coïncide avec l'axe de broche 4 ; à la figure 5, la pince 18 est en position intermédiaire de prise de pièce 1 dans le magasin, la pince 19 étant en position de transport de pièce usinée 2 ; à la figure 6, la pince 19 occupe sa position de déchargement d'une pièce usinée 2 tandis que la pince 18 est en position de transport d'une pièce 1 à usiner ; à la figure 7, la pince 19 est en position de dépôt d'une pièce usinée 2 tandis que la pince 18 est en position de transport d'une pièce à usiner 1 ; à la figure 8, les deux pinces 18 et 19 sont en position de prise d'une pièce 1 à usiner et de pose d'une pièce 2 usinée.

Le dispositif suivant l'invention fonctionne de la manière suivante : la position du chariot 12 par rapport à la poutre 5 est réglée, par l'intermédiaire du moteur 15, en fonction de la longueur des pièces à usiner. Tant que cette longueur reste constante, le chariot 12 est immobile par rapport à la poutre et c'est cette dernière qui est entraînée en va-et-vient par le vérin 44 pour transférer les pinces des magasins susdits à l'endroit de chargement et de déchargement des pièces, les mouvements de la poutre et des pinces étant tels que lorsque les pinces, dont les mouvements sont commandés par des électrovannes 52, sont situées à l'endroit susdit, la pince 18 est garnie d'une pièce 1 à usiner, la pince 19 étant vide. Dès qu'une pièce 2 sera usinée, la pince 19 sera d'abord commandée pour saisir cette pièce 2 et la dégager, la pince 18 posera alors la pièce 1 à usiner pendant que la poutre 5 reste fixe, ces opérations terminées et pendant le tournage de la pièce qui vient d'être posée, la poutre 5 accomplit un aller-retour au cours duquel la pince 19 dépose la pièce usinée et qu'une nouvelle pièce à usiner est saisie par la pince 18.

Il doit être entendu que l'invention n'est nullement limitée à la forme de réalisation décrite et que bien des modifications peuvent être apportées à cette dernière sans sortir du cadre du présent brevet.

C'est ainsi que l'on pourrait avoir un dispositif de manutention dont la poutre 5 est fixe, l'acheminement des pièces à l'aide des pinces 18 et 19, s'effectuant grâce à un chariot 12 se déplaçant sur la poutre 5.

On pourrait également prévoir dans un dispositif, à poutre 5 mobile ou fixe, des pinces 18 et 19 fixes l'une par rapport à l'autre, c'est-à-dire que, lorsqu'une des pinces se rapprocherait de l'axe de la broche pour poser ou retirer une pièce, l'autre s'écarterait de cet axe de la même distance.

Les pinces du dispositif tel que décrit ci-dessus sont conçues pour manipuler des pièces momentanément immobiles. Toutefois, suivant l'invention et comme montré à la figure 9, chacune des extrémités libres 41 des leviers 38 pourrait être garnie d'un galet 53 pouvant tourner autour d'un axe 54 parallèle à l'axe de la broche. Grâce à ces galets 53, les pinces du dispositif pourraient maintenir une pièce tournant autour de son axe pendant la manutention de cette pièce s'effectuant avec le tour en marche. Cet agencement des pinces est particulièrement intéressant lorsque l'opération de tournage est très brève, car il permet de manipuler les pièces sans arrêt du mandrin du tour. Il est évident qu'un tel agencement raccourcit notablement le temps requis pour la manipulation. En outre, la pince de déchargement peut être utilisée comme lunette dès que l'on a réalisé son assise, de sorte que cette pince contribue à assurer la rigidité de la pièce pendant son tournage et qu'elle peut, dès que celui-ci est terminé, dégager ladite pièce du mandrin.

## Revendications

1. Dispositif pour la manipulation automatique de pièces à usiner sur un tour, en particulier un tour pourvu de commandes programmées pour fixer et libérer les pièces à usiner (1, 2) par rapport aux mandrin (3) et contrepointe du tour, ledit positif comprenant une poutre (5) dont l'axe longitudinal est parallèle à l'axe (4) de la broche du tour, un chariot (12), situé entre la poutre (5) et l'axe (4) de la broche, monté sur la poutre (5) de manière à pouvoir se déplacer sur cette dernière suivant son axe longitudinal, des moyens (14), pour assurer le déplacement du chariot sur la poutre (5), deux pinces (18 et 19) supportées par le chariot (12), ces pinces (18 et 19) étant articulées autour d'un axe (20) et immobiles suivant une direction parallèle audit axe (20), cet axe (20) et ces pinces (18 et 19) étant agencés pour que l'axe (21, 22) d'une pièce (1, 2) maintenue par chacune des pinces (18, 19) soit parallèle à l'axe (4) de la broche et situé sur une surface cylindrique droite (23) dont l'axe coïncide avec l'axe (20) autour duquel les pinces (18 et 19) sont articulées, des moyens (24) pour déplacer chacune des pinces (18 et 19) entre deux positions extrêmes, une position dans laquelle l'axe (21 ou 22) de la pièce (1 ou 2) maintenue par la pince considérée (18 ou 19) est confondu avec l'axe (4) de la broche et une position dans laquelle cet axe (21 ou 22) de la pièce (1 ou 2) est dégagé de l'axe (4) de la broche et des mandrin (3) et contrepointe du tour, et des moyens (25) agencés pour ouvrir et fermer séparément chacune desdites pinces au moins dans chacune des positions extrêmes susdites, ce dispositif étant caractérisé en ce que lesdites pinces (18, 19) sont disposées de part et d'autre du plan passant par l'axe de la broche (4) et par l'axe longitudinal de la poutre (5) et l'axe (20), autour duquel ces pinces (18, 19) sont articulées, est situé dans le plan susdit, le rayon de ladite surface cylindrique droite (23) dont l'axe coïncide avec l'axe (20) autour duquel les pinces (18, 19) sont articulées étant égal à la distance séparant ce dernier axe (20) de l'axe (4) de la broche.

2. Dispositif suivant la revendication 1, caractérisé en ce que la poutre susdite (5) est supportée par des paliers fixes et agencée dans ces derniers de manière à pouvoir se déplacer suivant son axe longitudinal, des moyens (11) étant prévus pour entraîner ladite poutre suivant une direction parallèle à son axe longitudinal.

3. Dispositif suivant l'une ou l'autre des revendications 1 et 2, caractérisé en ce que les deux pinces susdites (18 et 19) sont indépendantes l'une de l'autre, les moyens précités (24) pour déplacer les pinces entre leurs deux positions extrêmes étant agencés pour déplacer séparément chacune desdites pinces.

4. Dispositif suivant l'une quelconque des revendications 1 à 3, caractérisé en ce que les moyens précités (14) pour assurer le déplacement du chariot (12) sur la poutre (5) sont constitués par un moteur pas à pas (15) fixé au chariot, par une crémaillère (16) disposée parallèlement à l'axe longitudinal de la poutre (5) et fixé à cette dernière et par un pignon denté (17) agencé pour être entraîné en rotation autour de son axe par le moteur (15) et pour engrener avec ladite crémaillère (16).

5. Dispositif suivant l'une ou l'autre des revendications 3 ou 4, caractérisé en ce que chacune des pinces susdites est montée sur une buselure (27, 28) enfilée sur un arbre (29) et coaxiale à ce dernier, cet arbre (29) étant supporté par le chariot (12) et son axe (20) étant situé dans le plan précité passant par l'axe longitudinal de la poutre (5) et l'axe de la broche (4), ledit arbre étant agencé pour pouvoir tourner librement autour de son axe et pour être immobile suivant une direction parallèle audit axe, une des buselures (27) supportant une des pinces (18) étant calée sur l'arbre (29) de manière à être entraînée en rotation par celui-ci, tandis que l'autre buselure (28) supportant l'autre pince (19) est montée folle sur ledit arbre (29) de manière à être immobile suivant une direction parallèle à l'axe de l'arbre, les moyens précités (14) pour déplacer les pinces entre leurs positions extrêmes étant agencés pour entraîner l'arbre susdit (29) en rotation autour de son axe (20) et pour entraîner la buselure (28), montée folle sur ledit arbre (29), en rotation autour de l'axe (20) de ce dernier.

6. Dispositif suivant la revendication 5, caractérisé en ce que les moyens précités (24) pour déplacer les pinces (18, 19) entre leurs positions extrêmes susdites sont constitués par deux vérins (30 et 31) dont les cylindres (32 et 33) sont fixés au chariot précité (12), la tige de piston de chacun de ces vérins présentant une crémaillère (34, 35), la crémaillère (34) d'un des vérins (30) coopérant avec une zone dentée (36) ménagée à la périphérie de l'arbre susdit (29) pour entraîner ce dernier en rotation autour de son axe (20) tandis que la crémaillère (35) de l'autre vérin (31) coopère avec une zone dentée (37) ménagée à la périphérie de la buselure (28) montée folle sur l'arbre (24) pour entraîner cette dernière en rotation autour de l'arbre (29).

7. Dispositif suivant la revendication 6, caractérisé en ce que les vérins précités (30 et 31) sont à trois positions, deux de ces positions correspondant aux positions extrêmes précitées des pinces (18 et 19), une position pour le transport des pièces et une position pour faire coïncider l'axe (21, 22) de la pièce (1, 2) avec l'axe de la broche (4), la troisième position du vérin correspondant à une position intermédiaire des pinces, cette position étant soit la position de prise des pièces à usiner (1), soit la position de dépose des pièces usinées (2).

8. Dispositif suivant l'une quelconque des revendications 1 à 7, caractérisé en ce que les pinces (18 et 19) comprennent trois leviers (38) articulés à une de leurs extrémités sur une monture (40) de manière à se déplacer parallèlement à un plan perpendiculaire à l'axe de la broche (4), les extrémités libres (41) de ces leviers étant régulièrement réparties, à 120 degrés, sur une circonférence ayant pour centre l'axe précité (21, 22) des pièces (1, 2) maintenues par les pinces (18, 19), les leviers (38) de chacune des pinces (18, 19) étant commandés simultanément par un vérin (42) et par l'intermédiaire d'un embiellage (43) agencé pour que les distances séparant les extrémités libres (41) des leviers de l'axe susdit restent constamment égales.

9. Dispositif suivant la revendication 8, caractérisé en ce que les extrémités libres (41) des leviers des pinces sont agencées de manière à permettre qu'elles prennent appui sur la surface externe de la pièce à immobiliser (1, 2) ainsi que sur une surface interne d'un alésage réalisé dans ladite pièce.

10. Dispositif suivant la revendication 9, caractérisé en ce que chacune des extrémités libres des leviers des pinces est garnie d'un galet (53) pouvant tourner librement autour d'un axe (54) parallèle à l'axe de la broche (4) du tour.

11. Dispositif suivant l'une quelconque des revendications 2 à 10, caractérisé en ce que les moyens (11) précités prévus pour entraîner la poutre suivant une direction parallèle à son axe longitudinal sont constitués par un vérin à double effet (44), d'axe parallèle à l'axe longitudinal de la poutre (5) et dont le cylindre (45) est fixe, ce vérin (44) présentant une tige de piston (47, 47') faisant saillie à chacune des extrémités du cylindre, chacune des extrémités libres des tiges de piston étant munie d'une poulie (48, 48') d'axe perpendiculaire à l'axe du vérin, un câble (49) passant sur ces poulies de manière à former deux brins (49', 49'') sensiblement parallèles disposés de part et d'autre du cylindre (45), un desdits brins (49') étant immobilisé par rapport au cylindre (45) tandis que l'autre brin (49'') est immobilisé par rapport à la poutre (5).

**Claims**

1. Device for automatically handling workpieces on a lathe, particularly a lathe provided with programmed controls for securing and releasing the workpieces (1, 2) relative to the chuck (3) and tail-stock of the lathe, said device comprising a beam (5) the lengthwise axis of which is parallel to the axis (4) of the lathe spindle, a carriage (12) located between the beam (5) and the spindle axis (4), mounted on the beam (5) to be movable over said latter one along the lengthwise axis thereof, means (14) to insure the movement of the carriage over the beam (5), two clamps (18 and 19) supported by the carriage (12), said clamps (18 and 19) being hinged about an axis (20) and unmovable along a direction parallel to said axis (20), said axis (20) and said clamps (18 and 19) being so arranged as to have the axis (21, 22) of a piece (1, 2) retained by each one of the clamps (18, 19) parallel to the axis (4) of the spindle and located on a straight cylinder-shaped surface (23) the axis of which coïncides with the axis (20) about which the clamps (18 and 19) are hinged, means (24) for moving each one .of the clamps (18 and 19) between two and positions, one position in which the axis of the piece (1 or 2) retained by the clamp under consideration (18 or 19) is merged with the spindle axis (4), and one position in which said axis (21 or 22) of the piece (1 or 2) is removed from the spindle axis (4) and from the chuck (3) and tail-stock of the lathe, and means (25) so arranged as to open and close separately each one of said clamps at least in each one of said end positions, said device being characterized in that said clamps (18, 19) are arranged on either side of the plane passing through the spindle axis (4) and through the lenghtwise axis of the beam (5) and the axis (20) about which said clamps (18, 19) are hinged, is located in said plane, the radius of said straight cylinder-shaped surface (23) the axis of which coïncides with the axis (20) about which the clamps (18, 19) are hinged being equal to the spacing between said latter axis (20) and the spindle axis (4).

2. Device according to claim 1, characterized in that said beam (5) is supported by fixed bearings and arranged therein in such a way as to be movable along the lengthwise axis thereof, means (11) being provided to drive said beam along a direction parallel to the lengthwise axis thereof.

3. Device according to either one of claims 1 and 2, characterized in that both said clamps (18 and 19) are independent from one another, said means (24) for moving the clamps between both end positions thereof being so arranged as to move separately each one of said clamps.

4. Device according to any one of the claims 1 to 3, characterized in that said means (14) for insuring the movement of the carriage (12) over the beam (5) are comprised of a stepping motor (15) secured to the carriage, of a rack (16) arranged parallel to the lengthwise axis of the beam (5) and secured to this letter one, and of a pinion (17) so arranged as to be rotated about the axis thereof by the motor (15) and to mesh with said rack (16).

5. Device according to either one of claims 3 and 4, characterized in that each one of said clamps is mounted on a sleeve (27, 28) slipped over a shaft (29) and co-axial therewith, said shaft (29) being supported by the carriage (12) and the axis (20) thereof being located in said plane passing through the lengthwise axis of the beam and the spindle axis (4), said shaft being so arranged as to be freely rotatable about the axis thereof, the one sleeve (27) supporting the one clamp (18) being fast to the shaft (29) to be rotated thereby, while the other sleeve (28) supporting the other clamp (19) is mounted loose on said shaft (29) so as to be unmovable along a direction parallel to the shaft axis, said means (14) for moving the clamps between the end positions thereof being so arranged as to rotate said shaft (29) about the axis thereof (20) and to rotate the sleev (28) which is mounted loose on said shaft (29), about the shaft axis (20).

6. Device according to claim 5, characterized in that said means (24) for moving the clamps (18, 19) between said end positions thereof are comprised of two jacks (30 and 31) the cylinders (32 and 33) of which are secured to said carriage (12), the piston rod from each said jacks having a rack (34, 35), the rack (34) from the one jack (30) cooperating with a toothed area (36) provided on the circumference of said shaft (29) to rotate same about the axis thereof (20) while the rack (35) from the other jack (31) cooperates with a toothed area (37) provided on the circumference (28) which is mounted loose on the shaft (24) to rotate same about the shaft (29).

7. Device according to claim 5, characterized in that said jacks (30 and 31) have three positions, two from said positions corresponding to said end positions of the clamps (18 and 19), one position for conveying the pieces and one position for having the axis (21, 22) of the piece (1, 2) coincide with the spindle axis, the third position of the jack corresponding to an intermediate position of the clamps, said position being either the position for gripping the workpieces (1), or the position for laying-down the machined pieces (2).

8. Device according to any one of the claims 1 to 7, characterized in that the clamps (18 and 19) comprise three levers (38) hinged at the one end thereof on a holder (40) so as to move in parallel relationship with a plane to right angle to the spindle axis (4), the free ends (41) of said levers being regularly distributed at 120°, over a circumference having for center said axis (21, 22) of the pieces (1, 2) retained by the clamps (18, 19), the levers (38) from each one of the clamps (18, 19) being controlled simultaneously by a jack (42) and through a linking system (43) so arranged as to have the spacings between the free ends (41) of the levers and said shaft remain always equal.

9. Device according to claim 8, characterized in that the free ends (41) of the levers of the clamps are so arranged as to let said ends bear on the outer surface of the piece (1, 2) to be retained as well as on an inner surface of a boring provided in said piece.

10. Device according to claim 9, characterized in that each one of the free ends of the clamp levers is provided with a roller (53) which is freely rotatable about an axis (54) parallel to the lathe spindle axis (4).

11. Device according to any one of the claims 2 to 10, characterized in that said means (11) provided for driving the beam along a direction parallel to the lengthwise axis thereof are comprised of a double-action jack (44), with axis parallel to the lengthwise axis of the beam (5) and the cylinder of which (45) is fixed, said jack (44) having a piston rod (47, 47') projecting at each end of the cylinder, each one of the free ends of the piston rods being provided with a pulley (48, 48') with axis at right angle to the jack axis, a cable (49), passing about said pulleys to form two runs (49', 49") substantially parallel lying on either side of the cylinder (45), the one run (49') being fixed relative to the cylinder (45), while the other run (49") is fixed relative to the beam (5).

## Ansprüche

1. Vorrichtung zum automatischen Werkstückwechseln an einer Drehbank, insbesondere an einer Drehbank, für welche Programmsteuerungen vorgesehen sind, um die Werkstücke (1, 2) zwischen dem Spannfutter (3) und dem Reitstock der Drehbank zu spannen bzw. zu lösen, wobei die Vorrichtung aufweist : einen Träger (5), dessen Längsachse parallel zur Achse (4) der Drehbankspindel verläuft ; einen Schlitten (12), der zwischen dem Träger (5) und der Achse (4) der Spindel liegt und so an dem Träger (5) angebracht ist, daß er sich auf diesem in axialer Längsrichtung verschieben läßt, Mittel (14), welche die Verschiebung des Schlittens auf dem Träger (5) gewährleisten ; zwei Greifer (18 und 19), die von dem Schlitten (12) getragen werden und um eine Achse (20) schwenkbar, jedoch parallel zur Achse (20) unbeweglich sind, wobei die Achse (20) und die Greifer (18 und 19) in der Art wirken, daß die Achse (21, 22) eines von jedem der Greifer (18, 19) gehaltenen Werkstücks (1, 2) parallel zur Achse (4) der Spindel und auf einer geraden zylindrischen Oberfläche (23) liegt, deren Achse mit der Achse (20) übereinstimmt, um welche die Greifer (18, 19) schwenkbar sind ; Mittel (24) um jeden der Greifer (18 und 19) zwischen zwei Extrem-Stellungen zu verlagern, von denen in einer Stellung die Achse (21 oder 22) des von dem entsprechenden Greifer (18 oder 19) gehaltenen Werkstücks (1 oder 2) mit der Achse (4) der Spindel zusammenfällt und von denen in einer anderen Stellung die Achse (21 oder 22) des Werkstücks (1 oder 2) aus der Achse (4) der Spindel und aus dem Spannfutter (3) sowie aus dem Reitstock der Drehbank entfernt ist ; und Mittel (25), die geeignet sind, jeden dieser Greifer zumindest in jeder Extrem-Stellung zu öffnen oder zu schließen, dadurch gekennzeichnet, daß die Greifer (18, 19) zu beiden Seiten der durch die Achse der Spindel (4), durch die Längsachse des Trägers (5) und durch die Achse (20) der schwenkbaren Greifer (18, 19) verlaufenden Ebene liegen, wobei der Radius der geraden zylindrischen Oberfläche (23), deren Achse mit der Achse (20) für die Greifer (18, 19) zusammenfällt, gleich groß wie der Abstand der Achse (20) von der Achse (4) der Spindel ist.

2. Vorrichtung nach Anspruch 1, dadurch gekennzeichnet, daß der Träger (5) durch Festlager gehalten und in den letzteren so angeordnet ist, daß er sich entlang seiner Längsachse verschieben kann, und daß Mittel (11) vorgesehen sind, die den Träger parallel zu seiner Längsachse führen.

3. Vorrichtung nach Anspruch 1 oder 2, dadurch gekennzeichnet, daß die zwei Greifer (18 und 19) voneinander unabhängig sind, wobei die Mittel (24) für das Verlagern der Greifer zwischen ihren Extremstellungen so angeordnet sind, daß jeder Greifer getrennt verlagerbar ist.

4. Vorrichtung nach einem der Ansprüche 1 bis 3, dadurch gekennzeichnet, daß die Mittel (14) für die Gewährleistung der Verschiebung des Schlittens (12) auf dem Träger (5) von einem auf dem Schlitten befestigten Schrittmotor (15), von einer parallel zur Längsachse des Trägers (5) angeordneten und an letzterem befestigten Zahnstange (16) und von einem Ritzel gebildet sind, welches so angeordnet ist, daß es von dem Schrittmotor (15) gedreht wird und in die Zahnstange (16) eingreift.

5. Vorrichtung nach Anspruch 3 oder 4, dadurch gekennzeichnet, daß jeder der Greifer auf einer Buchse (27, 28) montiert ist, welche auf einer Welle (29) koaxial zu dieser stecken, wobei die Welle (29) vom Schlitten (12) getragen wird und ihre Achse (20) in der die Längsachse des Trägers (5) und die Spindelachse (4) enthaltenden Ebene liegt, wobei die Welle so angeordnet ist, daß sie sich um ihre Achse frei drehen kann und parallel zu ihrer Achse unverschiebbar ist, daß eine der einen Greifer (18) tragenden Buchsen (27) auf der Welle (29) in der Art aufgekeilt ist, daß der Greifer dadurch in Drehung versetzbar ist, daß die andere Buchse (28), welche den anderen Greifer (19) trägt, auf der Welle (29) derart montiert ist, daß er parallel zur Achse der Welle unverschiebbar ist, und daß Mittel (14) für das Verschwenken der Greifer zwischen ihren Extremstellungen so angeordnet sind, daß die Welle (29) um ihre Achse (20) und die auf die Welle (29) aufgesteckte Buchse (28) in Drehung um die Achse (20) versetzbar sind.

6. Vorrichtung nach Anspruch 5, dadurch gekennzeichnet, daß die Mittel (24) für die Verschwenkung der Greifer (18, 19) zwischen ihren Extremstellungen von zwei Hubzylindern (30 und 31) gebildet werden, deren Zylinder (32 und 33) auf dem Schlitten (12) befestigt sind, daß die Kolbenstangen jeder dieser Hubzylinder je eine Zahnstange (34, 35) aufweisen, wobei die Zahnstange (34) eine Hubzylinders (30) mit einem am Umfang der Welle (29) vorgesehenen gezahnten Bereich zusammenwirkt, um letztere in Drehung um ihre Achse (20) zu versetzen, und daß die Zahnstange (35) der anderen Schraubenspindel (31) mit dem auf dem Umfang der auf die Welle (29) aufgesteckten Buchse vorgesehenen gezahnten Bereich (37) zusammenwirkt, um letztere um die Welle (29) in Drehung zu versetzen.

7. Vorrichtung nach Anspruch 6, dadurch gekennzeichnet, daß die Hubzylinder (30 und 31) drei Stellungen haben, von denen zwei Stellungen den Extremstellungen der Greifer (18 und 19) entsprechen, und zwar eine Stellung für den Transport der Werkstücke und eine Stellung, um die Achse (21, 22) des Werkstücks (1, 2) mit der Achse der Spindel (4) in Übereinstimmung zu bringen, wobei die dritte Stellung des Hubzylinders einer Zwischenstellung der Greifer entspricht, in der die Werkstücke aufgenommen (1) oder losgelassen (2) werden.

8. Vorrichtung nach einem der Ansprüche 1 bis 7, dadurch gekennzeichnet, daß die Greifer (18 und 19) drei Hebel (38) aufweisen, die an einem ihrer Enden um eine Einrichtung (40) derart schwenkbar sind, daß sie parallel zu einer Normalebene zur Achse der Spindel (4) versetzbar sind, daß die freien Enden (41) der Hebel gleichmäßig im Abstand von 120° auf einem Umfang verteilt sind, der als Mittelpunkt die Achsen (21, 22) der von den Greifern (18, 19) gehaltenen Werkstücke (1, 2) enthält, und daß die Hebel (38) jedes Greifers (18, 19) gleichzeitig von einem Hubzylinder (42) und einem Gestänge (43) gesteuert sind, welches dazu dient, um die Abstände zwischen den freien Enden (41) der Hebel und der erwähnten Achse gleichzuhalten.

9. Vorrichtung nach Anspruch 8, dadurch gekennzeichnet, daß die freien Enden (41) der Hebel der Greifer derart angeordnet sind, daß sie sich auf die äußere Oberfläche der festzuhaltenden Werkstücke (1, 2) sowie an einer Innenfläche einer in dem Werkstück vorgesehenen Bohrung abstützen können.

10. Vorrichtung nach Anspruch 9, dadurch gekennzeichnet, daß jedes der freien Enden der Hebel der Greifer mit einer Rolle (53) versehen ist, die sich frei um eine parallel zur Achse der Drehbankspindel (4) verlaufende Achse (54) drehen kann.

11. Vorrichtung nach einem der Ansprüche 2 bis 10, dadurch gekennzeichnet, daß die Mittel (11) zur Verschiebung des Trägers parallel zu seiner Längsachse einen doppelt wirkenden Hubzylinder (44) aufweisen, dessen Achse parallel zur Längsachse des Trägers (5) ausgerichtet ist und dessen Zylinder (45) feststeht, wobei der Hubzylinder (44) eine Kolbenstange (47, 47') besitzt, die aus jedem Ender des Zylinders herausragt, daß die freien Enden der Kolbenstange mit einer Scheibe (48, 48') versehen sind, deren Achse senkrecht zur Achse des Hubzylinders steht, und daß ein Kabel (49) über die Scheiben in der Weise läuft, daß es zwei Stränge (49', 49") bildet, die genau parallel in den beiden Zylindern (45) verlaufen, wobei ein Strang (49") gegenüber dem Zylinder (45) und der andere Strang (49") gegenüber dem Träger (5) unbeweglich ist.

Fig. 1

Fig. 2

Fig. 3

Fig. 4

Fig. 5

Fig. 6

Fig. 7

Fig. 8

Fig. 9